Europäisches Patentamt

European Patent Office

Office européen des brevets

(19)

(11) Veröffentlichungsnummer : **0 134 391**
**B1**

(12) **EUROPÄISCHE PATENTSCHRIFT**

(45) Veröffentlichungstag der Patentschrift :
06.05.87

(51) Int. Cl.⁴ : **F 16 B 13/06**

(21) Anmeldenummer : **84103433.3**

(22) Anmeldetag : **28.03.84**

(54) **Spreizanker.**

(30) Priorität : **17.08.83 DE 3329732**

(43) Veröffentlichungstag der Anmeldung :
**20.03.85 Patentblatt 85/12**

(45) Bekanntmachung des Hinweises auf die Patenterteilung : **06.05.87 Patentblatt 87/19**

(84) Benannte Vertragsstaaten :
**AT BE CH FR GB LI NL SE**

(56) Entgegenhaltungen :
**DE-A- 2 429 862**
**DE-A- 2 613 499**
**DE-A- 3 044 051**
**FR-A- 2 349 759**
**FR-A- 2 360 007**
**GB-A- 1 434 048**

(73) Patentinhaber : **HILTI Aktiengesellschaft**

**FL-9494 Schaan (LI)**

(72) Erfinder : **Bergner, Arndt**
**Haderunstrasse 29**
**D-8000 München 70 (DE)**

(74) Vertreter : **Wildi, Roland**
**Hilti Aktiengesellschaft Patentabteilung**
**FL-9490 Schaan (LI)**

EP 0 134 391 B1

## Beschreibung

Die Erfindung betrifft einen Spreizanker zum Festlegen in sich zum Tiefsten hin partiell erweiternden Bohrungen, mit teilweise längsgeschlitzter Spreizhülse und diese durchsetzendem Anker-bolzen, wobei der Ankerbolzen im rückwärtigen Endbereich Lastangriffsmittel und im gegenüberliegenden bereich einen in den längsgeschlitzten Teil der Spreizhülse einziehbaren Spreizkegel aufweist.

Ein aus DE-A-2 613 499 bekannter Spreizanker der voran beschriebenen Art wird zum Festlegen im befestigungsgut derart in eine vorgefertigte Bohrung eingeführt, dass der rückwärtige Endbereich des Ankerbolzens aus der Bohrung ragt. Ein am Befestigungsgut anzubringender Gegenstand, wie beispielsweise eine Lasche, wird in Anlage an die Oberfläche des befestigungsgutes gebracht, wobei der Endbereich des Ankerbolzens den Gegenstand durchsetzt und überragt. Beispielsweise mit Hilfe einer Mutter, die auf den Endbereich, der ein als Aussengewinde ausgebildetes Lastangriffsmittel trägt, aufgeschraubt wird, erfolgt ein Zurückziehen des Ankerbolzens, wobei sich die Mutter über den zu befestigenden Gegenstand am Befestigungsgut abstützt. Der Spreizkegel des Ankerbolzens läuft dabei in den längsgeschlitzten Teil der Spreizhülse ein, sobald letztere an einem axialen Mitverschieben mit dem Ankerbolzen gehindert ist. Durch Einlaufen des Spreizkegels in den längsgeschlitzten Teil wird dieser aufgeweitet und legt sich formschlüssig in die partielle Erweiterung der Bohrung ein, so dass sich der Spreizanker im Befestigungsgut festlegt.

Die Nachteile eines solchen bekannten Spreizankers bestehen darin, dass aufgrund des Fehlens ausreichender Reibkräfte zwischen Spreizhülse und Bohrung das axiale Mitverschieben der Spreizhülse nur unter Abstützen an dem zu befestigenden Gegenstand verhindert wird. Da erfahrungsgemäss der zu befestigende Gegenstand vorerst vielfach hohl an der möglicherweise nicht plan ausgeführten Oberfläche des Befestigungsgutes aufliegt, gelangt die Spreizhülse mit ihrer rückwärtigen Stirnseite von der Verankerung im Ausmass der Hohlauflage über die Oberfläche des Befestigungsgutes hinaus. Der zu befestigende Gegenstand stützt sich somit an der überstehenden Spreizhülse ab, so dass eine satte Anlage des Gegenstandes am Befestigungsgut unter Abbau der Hohlauflage nicht möglich ist.

Zufolge des undefinierten Ausmasses solcher Hohlauflagen gelangt die Spreizhülse vor dem Spreizvorgang in eine axial undefinierte Stellung, so dass es zudem vielfach zu schlechter, den Verankerungswert des Spreizankers beeinträchtigender Anlage des längsgeschlitzten Teils der Spreizhülse an der in definierter Tiefe befindlichen Erweiterung der Bohrung kommt.

Der Erfindung liegt die Aufgabe zugrunde, einen Spreizanker der eingangs beschriebenen Art zu schaffen, der einen Abbau allfälliger Hohlauflagen der zu befestigenden Gegenstände sowie hohe Verankerungswerte durch axial definierten Einsatz der Spreizhülse gewährleistet.

Erfindungsgemäss wird die Aufgabe dadurch gelöst, dass die Spreizhülse ein zusätzliches Spreizelement aufweist, das in einer zum spreizkegelseitigen Ende der Spreizhülse in der Tiefe abnehmenden, nach aussen offenen Ausnehmung angeordnet ist.

Das erfindungsgemässe Anordnen eines zusätzlichen Spreizelementes an der Spreizhülse bewirkt, dass beim Zurückziehen des Ankerbolzens die Spreizhülse gegebenenfalls um einen nur minimalen Weg mitverschoben wird, da das Spreizelement mit beginnendem Verschieben der Spreizhülse von dieser unter Auflaufen an der geneigten Kontur der Ausnehmung gegen die Wandung der Bohrung verspannt wird. Erst darauffolgend läuft in den längsgeschlitzten Teil der auf diese Weise axial festgelegten Spreizhülse der Spreizkegel ein. Die Spreizhülse bedarf zur Verankerung somit nicht der Abstützung an dem zu befestigenden gegenstand, so dass eine allfällige Hohlauflage beim Festspannen des Spreizankers abgebaut werden kann. Ferner legt sich der trichterförmig geweitete Teil der Spreizhülse dank nur minimalen axialen Verschiebens derselben Lage definiert in der Erweiterung der Bohrung formschlüssig an und schafft so maximale Verankerungwerte.

Die dem Auflaufen des Spreizelementes dienende Kontur der Ausnehmung in der Spreizhülse kann geradlinig, zum spreizkegelseitigen Ende abnehmend oder zur Erzielung erhöhter Endspreizung, zunehmend gekrümmt ausgebildet sein. Für das Spreizelement eignen sich sowohl Metalle als auch Kunststoffe.

Zur Trennung des Spreizvorganges des längsgeschlitzten Teils der Spreizhülse vom Spreizvorgang des Spreizelementes ist die Ausnehmung vorzugsweise im ungeschlitzten Teil der Spreizhülse angeordnet. Damit wird eine definierte Abfolge der Spreizvorgänge erreicht. Das Spreizelement ist so im zylindrischen Abschnitt der Bohrung und der längsgeschlitzte Teil der Spreizhülse in der Erweiterung festlegbar.

Zur Erzielung einer gleichmässigen Druckverteilung ist die Ausnehmung vorzugsweise umlaufend ausgebildet.

Um ein flächenhaftes, verkantungsfreies Auflaufen des Spreizelementes an der Kontur der Ausnehmung zu erreichen, weist das Spreizelement nach einem weiteren Vorschlag der Erfindung keilförmigen Querschnitt auf.

In Weiterbildung der Erfindung ist das Spreizelement schalenförmig ausgebildet. Die vorzugsweise umlaufende Ausnehmung kann durch das schalenförmige Spreizelement grossteils gefüllt sein. Umschlingt das Spreizelement die Spreizhülse über einen Winkel von mehr als 180°, sitzt das Spreizelement ohne gesonderte Haltemittel auf der Spreizhülse fest. Das schalenförmige Spreizelement kann auch aus mehreren über Sollbruchstellen miteinander verbunden Segmenten bestehen. Ebenso ist es möglich, mehrere Segmente durch ein diese umgreifendes Halteband auf der Spreizhülse festzulegen.

Die Erfindung wird nachstehend anhand einer Zeichnung, die ein Ausführungsbeispiel eines erfindungsgemässen Spreizankers wiedergibt, näher erläutert. Es zeigen :

Figur 1 einen in eine partiell erweiterte Bohrung eingeführten Spreizanker in ungespreiztem Zustand, im Längsschnitt,

Figur 2 den Spreizanker nach Fig. 2 in gespreiztem Zustand, im Längsschnitt,

Figur 3 einen Schnitt durch den Spreizanker nach Fig. 2, gemäss Schnittverlauf III-III.

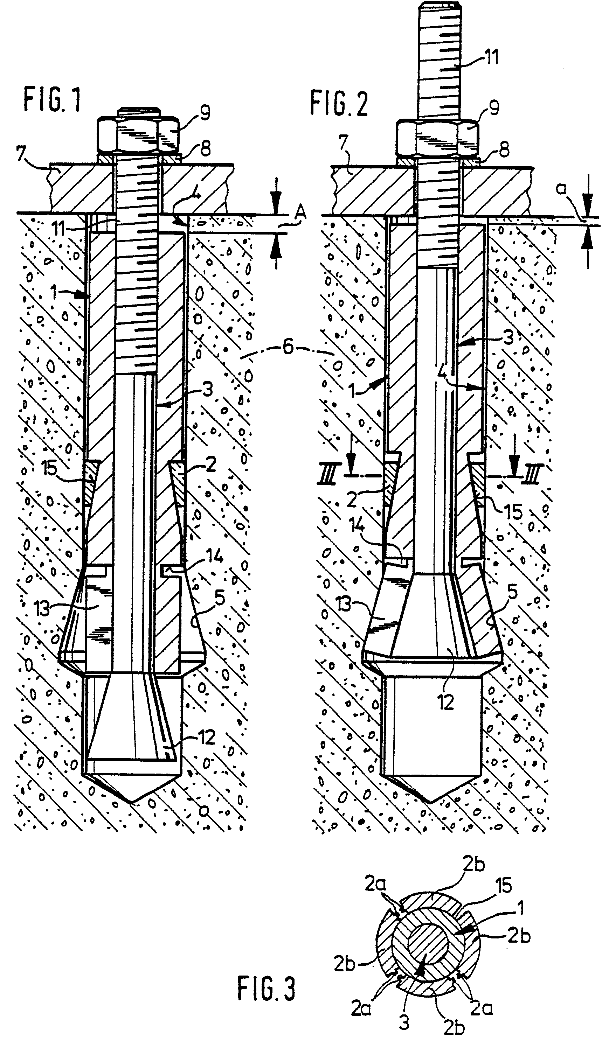

Der Spreizanker nach Fig. 1 besteht aus einer insgesamt mit 1 bezeichneten Spreizhülse mit einem schalenförmigen Spreizelement 2 und einem die Spreizhülse 1 durchsetzenden, insgesamt mit 3 bezeichneten Ankerbolzen. Der Spreizanker ist in eine insgesamt mit 4 bezeichnete Bohrung mit einer nahe dem Tiefsten vorgesehenen kegeligen Erweiterung 5 in einem Befestigungsgut 6 eingesetzt. Aufgabe des Spreizdübels ist das Festspannen eines flächigen Gegenstandes 7 an dem Befestigungsgut 6, wozu auch eine von einer Beilagscheibe 8 unterstützte Mutter 9 dient, die auf ein als Aussengewinde ausgebildetes Lastangriffsmittel 11 im rückwärtigen Endbereich des Ankerbolzens 3 aufgeschraubt ist. Vorderseitig weist der Ankerbolzen 3 einen Spreizkegel 12 auf. Dieser ist in die Spreizhülse 1 einziehbar, wobei der vordere Teil derselben zum Erleichtern der radialen Aufweitung über den Umfang verteilt mit Längsschlitzen 13 versehen ist. Die Längsschlitze 13 erstrecken sich bis zu einem Einstich 14, wodurch eine das Aufbiegen des längsgeschlitzten Teils erleichternde Gelenkstelle geschaffen wird. Zur Aufnahme des Spreizelementes 2 ist die Spreizhülse 1 mit einer umlaufenden Ausnehmung 15 versehen, deren Tiefe nach vorne gleichmässig abnimmt.

Der Spreizdübel wird, wie der Fig. 1 entnehmbar, so tief in die Bohrung eingeschoben, dass die Spreizhülse 1 mit deren rückwärtiger Stirnseite um das einigen Millimetern entsprechende Mass A unter die Oberfläche des Befestigungsgutes 6 zu liegen kommt.

Zum Festlegen des Spreizankers wird die Mutter 9 weiter auf den Ankerbolzen 3 aufgeschraubt, wodurch dieser unter Abstützung der Mutter 9 über die Beilagscheibe 8 und den Gegenstand 7 am Bearbeitungsgut 6 in der Bohrung 4 nach aussen verschoben wird. In erster Phase der Verschiebung nimmt der Ankerbolzen 3 über den Spreizkegel 12 die Spreizhülse 1 in Verschieberichtung mit, ohne deren längsgeschlitzten Teil zu weiten. Die kegelförmige Kontur der Ausnehmung 15 bewirkt dabei ein radiales Weiten des Spreizelementes 2 und damit dessen Verspannen zur Wandung der Bohrung 4 hin. Dieses Verspannen tritt nach Zurücklegung einer geringfügigen axialen Verschiebung der Spreizhülse 1 auf, worauf diese, unter einem verbleibenden Restabstand a zur Oberfläche des Befestigungsgutes 6, axial festgelegt ist. Durch weiteres Zurückziehen des Ankerbolzens 3 wird das Einlaufen des Spreizkegels 12 in den längsgeschlitzten Teil der Spreizhülse 1 bewirkt, wodurch sich dieser Teil formschlüssig hintergreifend an die Wandung der Erweiterung 5 anlegt. Der Spreizanker ist nun im Befestigungsgut 6 verankert und der Gegenstand 7 unter Aufhebung allfälliger zuvor vorhandener Hohlauflage gegen das Befestigungsgut 6 gespannt.

Die Fig. 3 zeigt das Spreizelement 2 in geweitetem Zustand, wobei es durch brechen über den Umfang verteilter Verbindungsstege 2a in vier Segmente 2b geteilt ist.

## Patentansprüche

1. Spreizanker zum Festlegen in sich zum Tiefsten hin partiell erweiternden Bohrungen (4), mit teilweise längsgeschlitzter Spreizhülse (1) und diese durchsetzendem Ankerbolzen (3), wobei der Ankerbolzen im rückwärtigen Endbereich Lastangriffsmittel (11) und im gegenüberliegenden Bereich einen in den längsgeschlitzten Teil der Spreizhülse einziehbaren Spreizkegel (12) aufweist, dadurch gekennzeichnet, dass die Spreizhülse (1) ein zusätzliches Spreizelement (2) aufweist, das in einer zum spreizkegelseitigen Ende der Spreizhülse (1) in der Tiefe abnehmenden, nach aussen offenen Ausnehmung (15) angeordnet ist.

2. Spreizanker nach Anspruch 1, dadurch gekennzeichnet, dass die Ausnehmung (15) im ungeschlitzten Teil der Spreizhülse (1) angeordnet ist.

3. Spreizanker nach Anspruch 1 oder 2, dadurch gekennzeichnet, dass die Ausnehmung (15) umlaufend ausgebildet ist.

4. Spreizanker nach einem der Ansprüche 1 bis 3, dadurch gekennzeichnet, dass das Spreizelement (2) keilförmigen Querschnitt aufweist.

5. Spreizanker nach einem der Ansprüche 1 bis 4, dadurch gekennzeichnet, dass das Spreizelement (2) schalenförmig ausgebildet ist.

## Claims

1. An expansible anchor, for securing in bores (4) which widen partially towards the deepest part, having a partially longitudinally slotted expansible sleeve (1) and an anchor bolt (3) which penetrates the latter, in which the anchor bolt has, in the rearward end region, load application means (11) and, in the opposite region, an expansion cone (12) which can be drawn into the longitudinally slotted part of the expansible sleeve, characterised in that the expansible sleeve (1) has an additional expansion element (2) which is arranged in an outwardly open recess (15) which decreases in depth to the expansion-cone-sided end of the expansible sleeve (1).

2. An expansible anchor according to claim 1, characterised in that the recess (15) is arranged in the unslotted part of the expansible sleeve (1).

3. An expansible anchor according to claim 1 or 2, characterised in that the recess (15) is encircling in design.

4. An expansible anchor according to one of claims 1 to 3, characterized in that the expansion element (2) has a wedge-shaped cross-section.

5. An expansible anchor according to one of claims 1 to 4, characterised in that the expansion element (2) is dish-shaped in design.

## Revendications

1. Cheville d'ancrage expansible pour le blocage dans des alésages (4) s'élargissant partiellement en direction du fond, avec une douille d'expansion (1) partiellement fendue dans le sens longitudinal et un boulon d'ancrage (3) qui la traverse, le boulon d'ancrage présentant dans la région terminale arrière des organes d'application de charge (11) et, dans la région opposée, un cône expansible (12) rétractable dans la partie fendue longitudinalement de la douille d'expansion, caractérisée en ce que la douille d'expansion (1) comprend un élément d'expansion supplémentaire (2) placé dans un évidement (15) ouvert vers l'extérieur et dont la profondeur diminue en direction de l'extrémité de la douille d'expansion (1) du côté du cône expansible.

2. Cheville d'ancrage expansible selon la revendication 1, caractérisée par le fait que l'évidement (15) est disposé dans la partie non fendue de la douille d'expansion (1).

3. Cheville d'ancrage expansible selon l'une des revendications 1 ou 2, caractérisée par le fait que l'évidement (15) présente une forme circonférentielle.

4. Cheville d'ancrage expansible selon l'une des revendications 1 à 3, caractérisée par le fait que l'élément d'expansion (2) présente une section en forme de coin.

5. Cheville d'ancrage expansible selon l'une des revendications 1 à 4, caractérisée par le fait que l'élément d'expansion (2) est réalisé en forme de coquille.

FIG.1

FIG.2

FIG.3